(19) Europäisches Patentamt

European Patent Office

Office européen des brevets

(11) Numéro de publication : **0 190 062**
**B1**

(12) **FASCICULE DE BREVET EUROPÉEN**

(45) Date de publication du fascicule du brevet :
15.06.88

(51) Int. Cl.⁴ : **F 21 P 5/00, F 16 M 11/18**

(21) Numéro de dépôt : 86400041.9

(22) Date de dépôt : 09.01.86

(54) **Support orientable pour miroir de projecteur de poursuite.**

(30) Priorité : 10.01.85 FR 8500292

(43) Date de publication de la demande :
06.08.86 Bulletin 86/32

(45) Mention de la délivrance du brevet :
15.06.88 Bulletin 88/24

(84) Etats contractants désignés :
AT BE CH DE GB IT LI NL SE

(56) Documents cités :
DE-A- 2 935 367
FR-A- 2 330 957
GB-A-    9 596
GB-A-   270 884
US-A- 2 510 319
US-A- 3 594 566
US-A- 4 419 721

(73) Titulaire : **UNIVERSAL TECHNIC**
**5, Passage Fréquel**
**F-75020 Paris (FR)**

(72) Inventeur : **Landre, Bernard**
**5, Passage Fréquel**
**F-75020 Paris (FR)**

(74) Mandataire : **Fruchard, Guy et al**
**CABINET BOETTCHER 23, rue la Boétie**
**F-75008 Paris (FR)**

## Description

La présente invention concerne un support orientable pour un miroir mobile associé à un projecteur de poursuite fixe.

On sait que dans de nombreuses applications il est nécessaire d'orienter un support dans une multitude de directions. En particulier, dans le cas d'un projecteur de poursuite, le support du projecteur doit pouvoir être orienté très rapidement afin de suivre l'évolution d'un acteur sur la scène ou d'effectuer des jeux de lumière très variés.

Dans les solutions antérieures, on a proposé de monter le projecteur sur le support afin de réaliser un éclairage direct. Toutefois, le projecteur, avec ses différents accessoires, constitue une masse importante ayant une inertie élevée de sorte qu'il est difficile de déplacer l'ensemble à grande vitesse. De plus, l'ensemble doit être alimenté en puissance au moyen d'un cordon électrique qui ne peut être soumis à des torsions multiples et les mouvements du support sont donc nécessairement limités tant en ce qui concerne la multiplicité des directions que la rapidité de mouvements.

On a également proposé de réaliser un éclairage indirect en disposant un miroir mobile en face d'un projecteur fixe. Dans les solutions proposées à ce jour, on a monté le miroir sur un ensemble de deux axes orthogonaux chacun entraîné en rotation par un moteur électrique. L'un des moteurs est alors monté sur le châssis tandis que l'autre moteur est solidaire du premier axe afin de faire tourner le second axe selon une direction transversale au premier axe. Pour alimenter le second moteur il est une fois encore nécessaire de prévoir un cordon d'alimentation électrique qui tourne en même temps que le premier axe et ce premier axe doit donc avoir un débattement limité pour éviter une torsion du cordon d'alimentation. On a également envisagé d'alimenter le second moteur au moyen de contacts frottants permettant ainsi une rotation illimitée du premier axe. Toutefois, les contacts frottants posent des problèmes d'usure et de qualité de contact. De plus, l'inertie de l'ensemble n'est pas sensiblement réduite en raison du poids du second moteur porté par le premier axe.

Un but de la présente invention est de proposer un support orientable pouvant pivoter plusieurs fois sur lui-même et ayant une inertie faible permettant une très grande rapidité des mouvements du support.

En vue de la réalisation de ce but, on prévoit selon l'invention un support orientable pour un miroir mobile associé à un projecteur de poursuite fixe comprenant un châssis, un arbre monté sur le châssis transversalement à une plaque support, des moyens pour entraîner l'arbre en rotation, un axe solidaire de l'arbre, s'étendant parallèlement à la plaque support et sur lequel la plaque support est montée de façon articulée, et des moyens de pivotement pour faire pivoter la plaque support autour de l'axe, caractérisé en ce que les moyens de pivotement comportent un câble flexible relié à une extrémité à la plaque support par des moyens pour permettre une rotation du point d'attache du câble par rapport à la plaque support, en un point écarté de l'axe d'articulation parallèle à la plaque support, ce câble flexible s'étendant à travers l'arbre creux et étant relié à une autre extrémité à des moyens de réglage de la longueur du câble solidaires du châssis, et des moyens de rappel de la plaque support vers une position de repos lorsque le câble est relâché.

Ainsi, les moyens d'entraînement de l'arbre creux et les moyens d'entraînement de la plaque support autour de l'axe d'articulation parallèle à celle-ci sont portés par le châssis et l'équipage mobile présente donc une inertie très faible. De plus, le câble flexible n'est soumis à aucune torsion lors de la rotation de l'arbre creux et on peut donc faire tourner l'arbre creux selon un nombre de tours illimité sans endommager le câble.

Selon une version préférée de l'invention, le support orientable comporte une potence ayant une première branche fixée à la plaque support et une seconde branche s'étendant transversalement à la plaque support, et l'extrémité du câble relié à la plaque support est fixée à une extrémité libre de la seconde branche de la potence. Ainsi, le point d'attache du câble à la plaque support est écarté de celle-ci et le câble crée un couple d'entraînement important sur la plaque support autour de l'axe parallèle à celle-ci même lorsque la plaque support est dans un plan presque parallèle à l'arbre creux.

Selon un autre aspect préféré de l'invention, la plaque support est articulée sur l'axe qui lui est parallèle au moyen de goussets ayant un bord circulaire comportant une gorge, et des ressorts de rappel s'appuient dans la gorge de chaque gousset. Ainsi la force des ressorts de rappel est appliquée à une distance constante de l'axe parallèle à la plaque support et la précision de la commande des mouvements de la plaque support est améliorée.

D'autres caractéristiques et avantages de l'invention apparaîtront à la lumière de la description suivante d'un exemple particulier de réalisation en liaison avec les dessins ci-joints parmi lesquels :

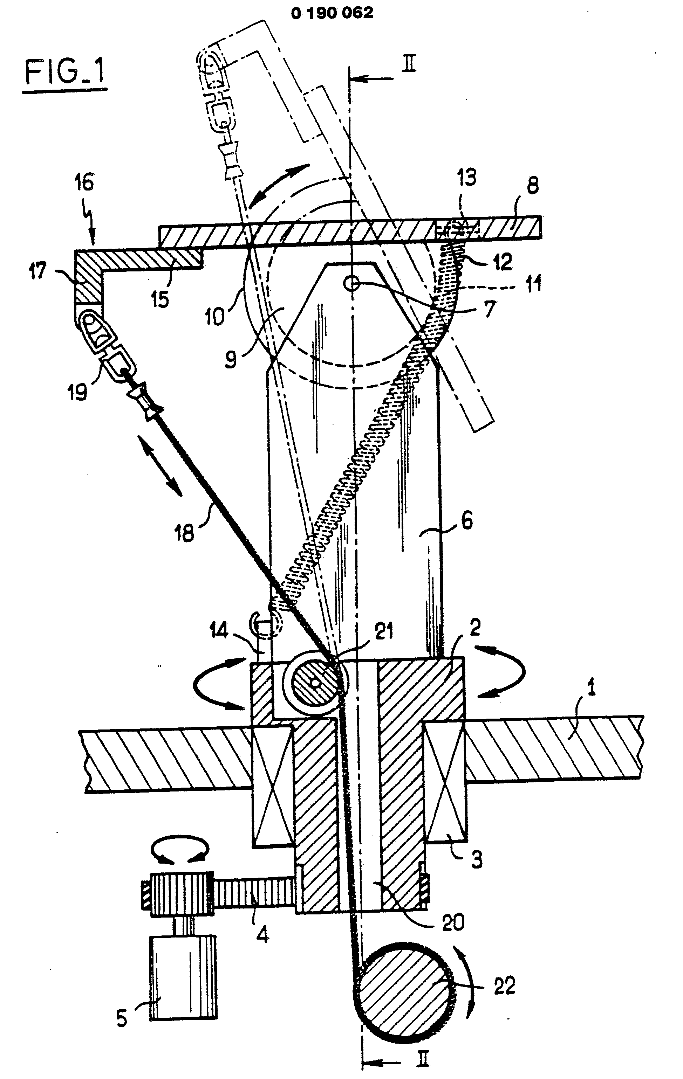

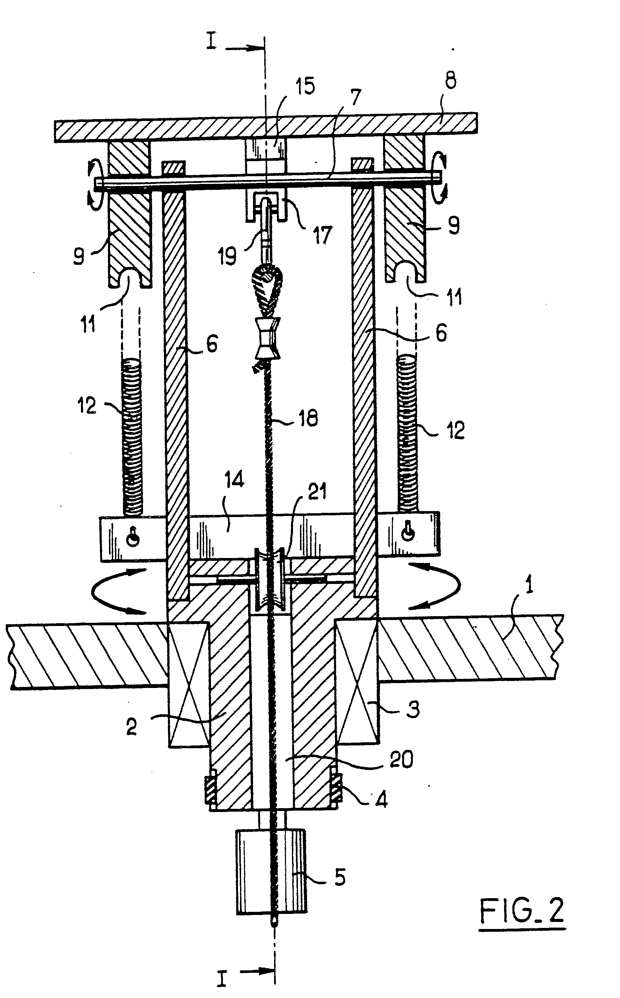

. la figure 1 est une coupe verticale du support orientable selon l'invention, selon le plan I-I de la figure 2 ;

. la figure 2 est une vue en coupe verticale du support selon l'invention, selon le plan II-II de la figure 1.

En se reportant aux figures, le support orientable selon l'invention comporte un châssis 1 représenté de façon partielle sur les figures et sur lequel est monté un arbre creux 2 perpendiculaire au châssis 1 et pouvant tourner par rapport à celui-ci au moyen d'un palier de butée 3. L'arbre creux 2 est entraîné en rotation par une courroie 4 reliée à un moteur électrique 5 fixé au châssis par des moyens conventionnels non représentés.

Des montants 6 sont fixés à l'arbre creux 2 et supportent un axe d'articulation 7 orthogonal à l'arbre creux 2. Une plaque support 8 est montée parallèlement à l'axe d'articulation 7 au moyen de goussets 9 fixés à la plaque support 8 perpendiculairement à celle-ci. Les goussets 9 ont un bord circulaire 10 comportant chacun une gorge 11 dans laquelle s'appuie un ressort 12 dont une extrémité est fixée à la plaque support, par exemple sur une tige 13 fixée transversalement à une ouverture dans la plaque support 8 (figure 1). L'autre extrémité de chaque ressort 12 est fixée à une plaque 14 solidaire des montants 6. La plaque support 8 se trouve ainsi rappelée par les ressorts 12 contre les montants 6 selon une position de butée représentée en trait mixte sur la figure 1.

En un point opposé à la tige 13 par rapport à l'axe d'articulation 7, une première branche 15 d'une potence généralement désignée en 16, est fixée à la face inférieure de la plaque support 8. La potence 16 comporte une seconde branche 17 s'étendant transversalement à la plaque 8 et à l'extrémité libre de laquelle est fixée une extrémité d'un câble flexible 18 par l'intermédiaire d'un émerillon 19.

Le câble 18 s'étend dans un canal axial 20 de l'arbre creux 2 en passant sur une poulie de renvoi à gorge 21. L'extrémité du câble 18 opposée à celle qui est fixée à la plaque support 8 est reliée à un tambour 22 solidaire du châssis 1 et sur lequel le câble 18 peut être enroulé à volonté au moyen d'un moteur électrique (non représenté) également porté par le châssis 1.

On constate donc que l'équipage mobile ne comporte que l'arbre creux 2, les montants 6, l'axe 7, les goussets 9, la plaque support 8 et une partie du câble 18.

On peut ainsi monter sur la plaque support 8 tout objet que l'on souhaite orienter dans différentes directions. En particulier, on peut monter un miroir. Dans le cas d'un miroir de projecteur de poursuite, le support orientable est disposé en face du projecteur fixe et les mouvements du rayon réfléchi sont commandés en agissant par des moyens de commande électroniques classiques sur la rotation du moteur 5 et du moteur d'entraînement du tambour 22. Pour chaque position du tambour 22, la plaque support 8 prend une orientation stable en raison des ressorts de rappel 12 qui agissent pour tendre la partie déroulée de câble 18. En raison de l'émerillon 19, l'arbre creux peut être tourné selon autant de tours que l'on souhaite et peut même être entraîné à grande vitesse afin d'obtenir des mouvements répétitifs très rapides du rayon réfléchi.

La présente invention est susceptible de variantes qui apparaîtront à l'homme de métier. En particulier, les ressorts de rappel 12 peuvent être remplacés par une petite masselotte portée par la plaque support 8 en un point opposé au point d'attache du câble 18 par rapport à l'axe 7 parallèle à la plaque support.

Dans le cas d'un projecteur de poursuite, bien que l'on ait indiqué que le miroir est de préférence fixé de façon démontable sur la plaque support 8, on peut fixer directement les goussets 9 à un miroir de sorte que celui-ci forme une partie intégrante du support orientable.

## Revendications

1. Support orientable pour un miroir mobile associé à un projecteur de poursuite fixe comprenant un châssis (1), un arbre (2) monté sur le châssis (1), une plaque support (8), des moyens pour entraîner l'arbre (2) en rotation, un axe (7) solidaire de l'arbre (2), s'étendant parallèlement à la plaque support (8) et sur lequel la plaque support est montée de façon articulée, et des moyens de pivotement pour faire pivoter la plaque support (8) autour de l'axe (7), caractérisé en ce que les moyens de pivotement comportent un câble flexible (18) relié à une extrémité à la plaque support (8) par des moyens (19) pour permettre une rotation du point d'attache du câble (18) par rapport à la plaque support (8), en un point écarté de l'axe d'articulation (7) parallèle à la plaque support (8), ce câble flexible (18) s'étendant à travers l'arbre creux (2) et étant relié à une autre extrémité à des moyens de réglage (22) de la longueur du câble (18) solidaires du châssis (1), et des moyens de rappel (12) de la plaque support (8) vers une position de repos lorsque le câble (18) est relâché.

2. Support orientable selon la revendication 1 caractérisé en ce qu'il comporte une potence (16) ayant une première branche (15) fixée à la plaque support (8) et une seconde branche (17) s'étendant transversalement au plan de la plaque support (8) et en ce que l'extrémité du câble (18) relié à la plaque support (8) est fixée à une extrémité libre de la seconde branche (17) de la potence (16).

3. Support orientable selon la revendication 1 ou la revendication 2, caractérisé en ce que les moyens de rappel de la plaque support (8) comportent au moins un ressort (12) ayant une extrémité fixée à la plaque support (8) et une extrémité solidaire d'un point de l'arbre creux (2) écarté de la plaque support (8).

4. Support orientable selon la revendication 3, caractérisé en ce que la plaque support (8) est articulée sur l'axe (7) qui lui est parallèle au moyen de goussets (9) ayant un bord circulaire (10) comportant une gorge (11) et en ce que chaque ressort (12) s'appuie dans la gorge (11) d'un gousset (9) correspondant.

## Claims

1. An orientable support for a movable mirror associated with a fixed travelling spotlight comprising a chassis (1), a shaft (2) mounted on the chassis (1), a support plate (8), means for driving the shaft (2) in rotation, a spindle (7) which is fixed with respect to the shaft (2), which extends parallel to the support plate (8) and on which the support plate is pivotally mounted, and pivoting means for pivoting the support plate (8) about the spindle (7), characterised in that the pivoting means comprise a flexible cable (18) connected at one end to the support plate (8) by means (19) for permitting a rotary movement of the point of attachment of the cable (18) with respect to the support plate (8), at a point which is spaced from the pivot spindle (7) parallel to the support plate (8), said flexible cable (18) extending through the hollow shaft (2) and being connected at another end to means (22) for regulating the length of the cable (18), said means being fixed with respect to the chassis (1), and means (12) for returning the support plate (8) towards a rest position when the cable (18) is released.

2. An orientable support according to claim 1 characterised in that it comprises a bracket (16) having a first arm (15) fixed to the support plate (8) and a second arm (17) extending transversely with respect to the plane of the support plate (8), and that the end of the cable (18) connected to the support plate (8) is fixed to a free end of the second arm (17) of the bracket (16).

3. An orientable support according to claim 1 or claim 2 characterised in that the means for returning the support plate (8) comprise at least one spring (12) having one end fixed to the support plate (8) and an end fixed with respect to a point on the hollow shaft (2) which is spaced from the support plate (8).

4. An orientable support according to claim 3 characterised in that the support plate (8) is pivotally mounted on the spindle (7) which is parallel thereto by means of support plates (9) having a circular edge (10) comprising a groove (11) and that each spring (12) bears in the groove (11) of a corresponding support plate (9).

### Patentansprüche

1. Einstellbarer Träger für einen Richtspiegel eines stationären Nachführscheinwerfers, mit einem Rahmen (1), einer auf dem Rahmen (1) befestigten Achse einer Halteplatte (8), einer Anrichtung, um die Hohlwelle (2) in Drehung zu versetzen, einer mit der Hohlwelle (2) fest verbundenen Achse (7), die sich parallel zur Halteplatte (8) erstreckt und auf welcher die Halteplatte verschwenkbar befestigt ist, sowie mit einer Schwenkeinrichtung zur Verschwenkung der Halteplatte (8) um die Achse (7), dadurch gekennzeichnet, dass die Schwenkeinrichtung ein biegsames Seil (18) umfasst, das an einem Ende über eine Einrichtung (19) mit der Halteplatte (8) verbunden ist, um eine Drehung des Befestigungspunktes des Seils (18) gegenüber der Halteplatte (8) zu gestatten, um einen von der parallel zur Halteplatte (8) verlaufenden Schwenkachse (7) entfernten Punkt, und dass sich das biegsame Seil (18) durch die Hohlwelle (2) erstreckt und an ihrem anderen Ende mit einer Einstellvorrichtung (22) für die Länge des Seils (18) verbunden ist, die fest am Rahmen (1) angebracht ist, und dass eine Rückhohleinrichtung (12) für die Halteplatte (8) vorhanden ist, um diese in eine Ruhelage zu bringen, wenn das Seil (18) gelockert ist.

2. Einstellbarer Träger nach Anspruch 1, dadurch gekennzeichnet, dass er einen Ausleger (16) aufweist, der einen ersten an der Halteplatte (8) befestigten Abschnitt (15) aufweist, sowie einen zweiten Abschnitt (18), der sich quer zur Ebene der Halteplatte (8) erstreckt, und dass das Ende des an der Halteplatte (8) befestigten Seils (18) an einem freien Ende des zweiten Abschnittes (17) des Auslegers (18) angebracht ist.

3. Einstellbarer Träger nach Anspruch 1 oder 2, dadurch gekennzeichnet, dass die Rückholeinrichtung für die Halteplatte (8) mindestens eine Feder (12) umfasst, deren eines Ende an der Halteplatte (8) befestigt ist und die ein Ende aufweist, das mit einem Punkt der Hohlwelle (2) verbunden ist, der im Abstand von der Halteplatte (8) liegt.

4. Einstellbarer Träger nach Anspruch 3, dadurch gekennzeichnet, dass die Halteplatte (8) verschwenkbar auf der zu ihr parallelen Achse (7) mit Hilfe von Winkelblechen (9) befestigt ist, die einen kreisförmigen Rand (10) aufweisen, der eine Auskehlung (11) hat, und dass jede Feder (12) sich gegen die Auskehlung (11) eines zugeordneten Winkelbleches (9) abstützt.

FIG.1

0 190 062

FIG. 2